Europäisches Patentamt

European Patent Office

Office européen des brevets

(19)

(11) Numéro de publication : **0 148 672**
**B1**

(12)  **FASCICULE DE BREVET EUROPÉEN**

(45) Date de publication du fascicule du brevet :
24.01.90

(51) Int. Cl.⁵ : **G 01 S   3/46**

(21) Numéro de dépôt : 84402524.7

(22) Date de dépôt : 06.12.84

(54) Radiogoniomètre à écart de temps d'arrivée, monocanal, adapté au traitement de signaux modulés en amplitude de type A3J ou A1.

(30) Priorité : 13.12.83 FR 8319925

(43) Date de publication de la demande :
17.07.85 Bulletin 85/29

(45) Mention de la délivrance du brevet :
24.01.90 Bulletin 90/04

(84) Etats contractants désignés :
DE GB IT

(56) Documents cités :
FR--A-- 2 494 017
US--A-- 3 806 937
US--A-- 4 220 954

(73) Titulaire : THOMSON-CSF
51, Esplanade du Général de Gaulle
F-92800 Puteaux (FR)

(72) Inventeur : Multedo, Gilbert
THOMSON-CSF SCPI 173, bld Haussmann
F-75379 Paris Cedex 08 (FR)
Inventeur : Albarello, Alain
THOMSON-CSF SCPI 173, bld Haussmann
F-75379 Paris Cedex 08 (FR)
Inventeur : Wine, Jacques
THOMSON-CSF SCPI 173, bld Haussmann
F-75379 Paris Cedex 08 (FR)

(74) Mandataire : Turlèque, Clotilde et al
THOMSON-CSF SCPI
F-92045 PARIS LA DEFENSE CEDEX 67 (FR)

EP 0 148 672 B1

## Description

L'invention se rapporte au domaine de la radiogoniométrie et plus particulièrement à un procédé de radiogoniométrie adapté au traitement de signaux modulés en amplitude de type $A_{3J}$ ou $A_1$ et à un radiogoniomètre à écart de temps d'arrivée, monocanal pour la mise en œuvre de ce procédé.

La mesure de l'angle d'arrivée des émissions radioélectriques du type modulation d'amplitude à BLU sans porteuse, (type $A_{3J}$ selon la classification internationale de ce type d'émissions), ou du type modulation d'amplitude par tout ou rien (type $A_1$ selon cette même classification), ne peut pas être obtenue au moyen d'un radiogoniomètre à écart de temps d'arrivée monocanal classique. En général le traitement de ce type de signaux est donc réalisé dans un radiogoniomètre à plusieurs canaux de réception.

En effet, dans la technique de radiogoniométrie par interférométrie, la valeur de l'angle d'arrivée $\alpha$ d'une onde radioélectrique est déduite du déphasage entre les signaux reçus sur deux antennes proches distantes de d, mesuré par interférométrie entre deux canaux de réception. Dans un radiogoniomètre monocanal, par exemple du type décrit dans le brevet américain US-A-3 806 937, qui ne dispose que d'une voie de réception, la mesure de l'angle d'arrivée est effectuée par une méthode d'interférométrie détournée en mesurant l'écart de temps d'arrivée $\tau$ de l'onde sur les deux antennes, $\tau = d/c \sin \alpha$, où c est la vitesse de la lumière. Cette mesure est possible pour des signaux modulant une porteuse, en amplitude ou en fréquence type $A_3$ ou $F_3$, de la manière suivante : les sorties des antennes sont reliées à des lignes à retards variables, et les sorties de ces lignes sont reliées à un coupleur hybride à quadrature. Les sorties du coupleur délivrent des combinaisons des signaux de sortie des antennes et un commutateur relie alternativement, à un rythme fixe, l'entrée du récepteur à l'une et l'autre des sorties du coupleur pour créer un signal modulé en amplitude. Le signal modulé est significatif, après détection, de la différence d'énergie entre les signaux présents aux sorties du coupleur hybride. La période de commutation des sorties du coupleur est choisie, de manière à éliminer l'influence de la modulation sur l'estimation de cette différence d'énergie pour qu'elle soit seulement représentative de la différence d'énergie des porteuses. Cette fréquence de commutation est donc choisie pour éliminer jusqu'aux fréquences les plus basses du spectre de la modulation propre du signal. Le signal de sortie du détecteur est alors uniquement fonction de l'écart de temps d'arrivée sur les deux antennes et donc de l'angle $\alpha$ d'arrivée de l'émission. Cet angle est repéré par rapport à la normale à la base de mesure interférométrique constituée par les deux antennes, pour une émission arrivant avec un angle de site nul.

Ce signal est reçu dans le récepteur et traité, après transposition, filtrage et régulation, par une unité de gestion qui délivre un signal d'asservissement pour compenser par les lignes à retard, l'écart de temps d'arrivée entre les deux antennes de manière à obtenir un écart de phase nul entre les entrées du coupleur hybride ; le réglage des lignes à retard donne alors une mesure de l'angle d'arrivée de l'émission radio.

Cette solution n'est pas applicable aux signaux reçus modulés en bande latérale unique, BLU, sans porteuse, type $A_{3J}$, ou modulés en amplitude par tout ou rien, type $A_1$, car la différence d'énergie entre les deux sorties du coupleur hybride n'est pas seulement représentative de l'écart de phase entre les entrées du coupleur, mais traduit également les variations du signal de modulation. Par exemple, en mode $A_{3J}$ l'absence d'énergie à la fréquence porteuse fait que l'énergie est représentative du signal de modulation lui-même et varie très différemment selon que l'on est dans une séquence du signal de parole du type période de silence, période peu voisée, ou période très voisée. De même en modulation de type $A_1$ les messages émis sont des suites de mots binaires qui créent le découpage de l'amplitude d'une porteuse par tout ou rien suivant un rythme digital ; l'énergie du signal peut donc être très variable d'une période T à la période suivante.

La présente invention a pour objet un procédé de radiogoniométrie adapté pour traiter également les signaux à bande latérale unique sans porteuse type $A_{3J}$, ou les signaux modulés par tout ou rien, type $A_1$.

Suivant l'invention, un procédé de radiogoniométrie utilisant un radiogoniomètre à écart de temps d'arrivée, monocanal, le goniomètre comportant une base de mesure formée de deux antennes reliées aux entrées d'un coupleur hybride à quadrature par l'intermédiaire de lignes à retard commandables, un récepteur, un circuit de commande des lignes à retard, un circuit de gestion et un commutateur, le procédé comprenant les étapes suivantes : les sorties du coupleur sont alternativement reliées à l'entrée du récepteur par l'intermédiaire du commutateur qui est commandé par un signal de commutation, le circuit de gestion génère le signal de commutation et traite un signal prélevé dans le récepteur pour élaborer un signal d'écartométrie fonction de la différence des énergies mesurées sur le signal prélevé entre commutations successives et le circuit de commande des lignes à retard est commandé par le signal d'écartométrie, est caractérisé en ce que le circuit de gestion commande :

une phase de détection de présence du signal reçu pendant laquelle le commutateur relie alternativement les sorties du coupleur à l'entrée du canal de réception à un rythme fixe,

une phase d'analyse du signal ainsi détecté pour générer le dit signal de commutation synchronisé sur le signal détecté,

et une phase de validation des mesures d'énergie pour confirmer la continuité du signal détecté, conditionnant la génération du signal d'écartométrie, et en ce qu'une phase d'analyse succède à une phase de validation positive, tandis qu'une nouvelle phase de détection succède à une phase de validation négative.

Pour un signal de parole modulé en « $A_3J$ », l'analyse du signal détecté peut être effectuée par exemple, par le procédé d'acquisition de la fréquence de mélodie décrit dans la demande de brevet français FR-A-2494017 par la Demanderesse.

L'invention a également pour objet le radiogoniomètre à écart de temps d'arrivée monocanal, pour la mise en œuvre de ce procédé.

L'invention sera mieux comprise et d'autres caractéristiques apparaîtront à l'aide de la description qui suit en référence aux figures annexées.

La figure 1 représente un schéma synoptique du radiogoniomètre suivant l'invention.

La figure 2 est un schéma synoptique du circuit de gestion représenté sur la figure 1.

La figure 3 est un exemple de signal voisé en début de parole.

La figure 4 est un chronogramme des signaux de commande dans le circuit de gestion.

La figure 5 est un exemple de signal en cours de parole, avec le signal d'horloge de commutation pour la mesure de l'angle d'arrivée sur un signal modulé en bande latérale unique.

La figure 6 est un organigramme indiquant les principales étapes du procédé de traitement mis en œuvre dans le dispositif décrit ci-dessus.

Le dispositif de radiogoniométrie suivant l'invention comporte des moyens pour synchroniser la détection de la tension d'écartométrie sur le signal modulant et en particulier, lorsque le signal BLU est un signal de parole, sur la fréquence de mélodie du signal de parole. La fréquence de mélodie est la valeur de la fréquence correspondant à la périodicité temporelle très marquée du signal de parole dans les segments voisés. Cette fréquence de mélodie, liée à la vibration des cordes vocales, varie d'un individu à l'autre et est comprise entre 60 et 300 Hz. Elle est quasi constante quel que soit le son prononcé pour un même individu, mais l'amplitude du signal de parole varie dans une période de mélodie en fonction du son prononcé.

Ainsi, la synchronisation de la détection de la tension d'écartométrie sur la fréquence de mélodie rend cette détection indépendante de la dynamique propre du signal de parole.

Pour cela, la fréquence de commutation des sorties du coupleur hybride est choisie égale à la moitié de la fréquence de mélodie, chaque sortie du coupleur étant reliée au canal de réception pendant une période de mélodie. La tension d'écartométrie calculée à partir des énergies mesurées dans trois demi-périodes de commutation successives n'est validée qu'après confirmation de la stationnarité du signal durant ces trois demi-périodes.

Le dispositif de radiogoniométrie suivant l'invention comporte donc des moyens analogues à ceux mis en œuvre dans un radiogoniomètre à écart de temps d'arrivée adapté à la réception de signaux modulés en amplitude classique, associés à des moyens de détection de la fréquence de mélodie dans le signal de parole reçu, et à un circuit de gestion particulier prenant en compte cette fréquence de mélodie dans le cas d'une détection d'un signal de type $A_3J$ pour commander la commutation des sorties du coupleur et la mesure du signal d'écartométrie.

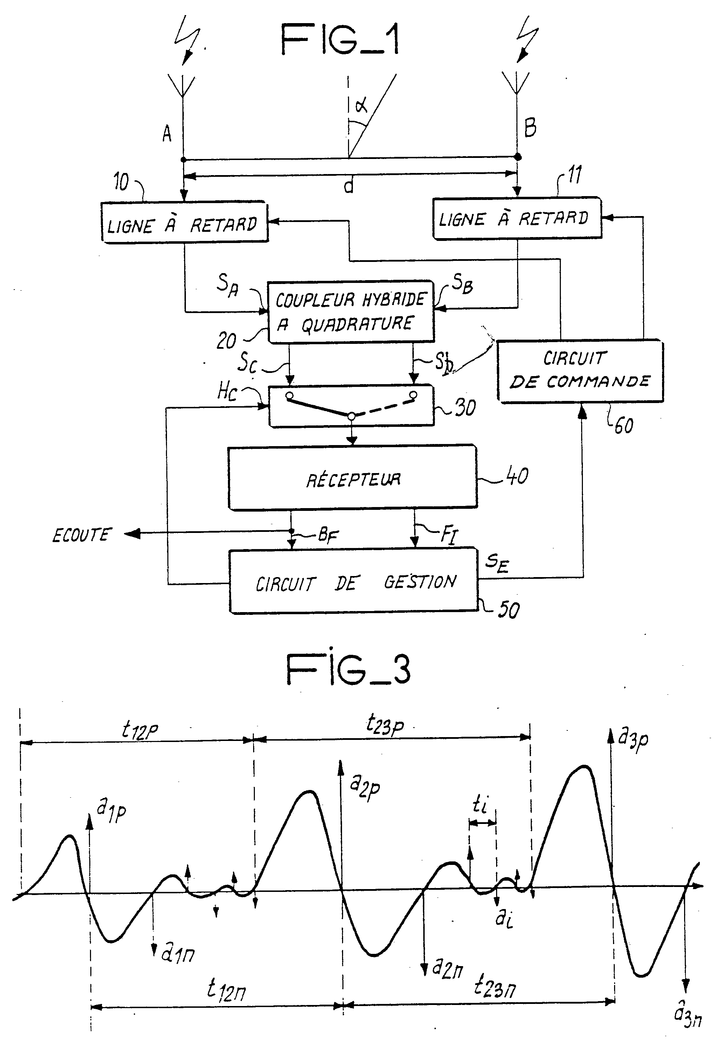

La figure 1 représente un schéma général de l'ensemble de ces moyens. Les antennes A et B forment la base interférométrique. Ce sont deux antennes identiques distantes de d. Les sorties de ces antennes sont reliées aux entrées de deux lignes à retard 10 et 11 ayant des entrées de commande de retard. Les sorties des lignes à retard 10 et 11 sont reliées aux entrées d'un coupleur hybride à quadrature, 20, dont les sorties délivrent des combinaisons des signaux présents sur ses entrées. Soient $S_A$ et $S_B$ les signaux d'antennes retardés présents à la sortie des lignes à retard 10 et 11. Soient $S_C$ et $S_D$ les signaux de sortie du coupleur hybride à quadrature 20, ces signaux s'écrivent de la manière suivante :

$$S_C = \frac{1}{\sqrt{2}} (S_A + jS_B)$$

$$S_D = \frac{1}{\sqrt{2}} (S_B + jS_A).$$

En prenant comme référence de phase le signal sur l'antenne A et en supposant les deux voies appairées en gain, les signaux $S_A$ et $S_B$ s'expriment en fonction de l'amplitude $S(t)$ et de la phase $\varphi(t)$ du signal de parole de la manière suivante :

$$S_A(t) = S(t) e^{j(\omega_0 t + \varphi(t) + \omega_0 \tau_A)}$$

$$S_B(t) = S(t) e^{j(\omega_0 t + \varphi(t) + \omega_0 \tau_B + \Delta\varphi)}$$

où $\omega_0$ est la pulsation du signal porteur, $\tau_A$ et $\tau_B$ les retards introduits par les lignes à retard respectivement 10 et 11, et $\Delta\varphi$ l'écart de phase en sortie des deux antennes. Pour une émission arrivant avec un angle de site nul, l'écart de phase, directement proportionnel à l'écart de temps d'arrivée, est également fonction de $\sin \alpha$ : $\Delta\varphi = 2\pi \, d/\lambda_0 \sin \alpha$, où $\lambda_0$ est la longueur d'onde du signal porteur. Les modules des signaux de sortie du coupleur sont donc :

$$|S_C(t)| = S(t)\sqrt{1 - \sin \psi}$$

$$|S_D(t)| = S(t)\sqrt{1 + \sin \psi}$$

$$\text{où } \psi = \Delta\varphi - \omega_0(\tau_A - \tau_B).$$

La commutation des sorties du coupleur crée donc un signal modulé en amplitude à la fréquence de commutation dont l'indice de modulation dépend de $\psi$. Le radiogoniomètre permet d'élaborer un signal d'erreur caractéristique de cette modulation qui peut être annulé en modifiant les retards $\tau_A$ et $\tau_B$ introduits par les lignes à retard pour compenser l'écart de temps d'arrivée $\tau$ entre les deux antennes (et l'écart de phase $\Delta\varphi$).

Pour cela les sorties du coupleur hybride à quadrature sont reliées aux entrées d'un commutateur 30 commandé par une horloge de commutation $H_C$. La sortie du commutateur est reliée à l'entrée du récepteur 40 dont la sortie basse fréquence BF est le signal d'écoute. Pour la détermination de la direction dans laquelle se trouve l'émetteur, la mesure de l'angle d'arrivée de l'émission est obtenue au moyen d'un circuit de gestion 50 ayant une première entrée reliée à la sortie BF du récepteur et une seconde entrée reliée à une entrée à fréquence intermédiaire FI régulée prélevant le signal à fréquence intermédiaire dans le récepteur.

En effet, le traitement du signal reçu pour l'obtention de la tension d'écartométrie peut être réalisé soit sur le signal démodulé à basse fréquence, soit sur le signal à fréquence intermédiaire régulé. Dans le premier cas il est nécessaire que l'oscillateur local de mélange utilisé dans le récepteur pour détecter le signal modulé en bande latérale unique soit parfaitement accordé sur la fréquence reçue. En réalité, cet accord est réalisé par un opérateur d'écoute, et n'est jamais parfait. Il y a donc une dérive de l'oscillateur local par rapport à la fréquence reçue. Pour les traitements ultérieurs du signal en vue de l'acquisition de la fréquence de mélodie, il est nécessaire que cette dérive reste toujours très inférieure à une dizaine de hertz. Dans le second cas, c'est-à-dire en utilisant le signal à fréquence intermédiaire régulé du récepteur, le traitement nécessaire pour la mesure de la fréquence de mélodie est réalisé sur l'enveloppe du signal à bande latérale unique, cette enveloppe présentant des caractéristiques de fréquence analogues à celles du signal de parole lui-même. Le radiogoniomètre suivant l'invention permet de réaliser l'un ou l'autre des deux traitements, au choix de l'opérateur.

Le circuit de gestion 50 a une sortie reliée à l'entrée de commande de commutation $H_C$ du commutateur 30, et une sortie reliée à l'entrée d'un circuit de commande 60 dont les sorties sont reliées aux entrées de commande des lignes à retard 10 et 11 pour annuler l'écart de temps d'arrivée entre les signaux transmis par les antennes.

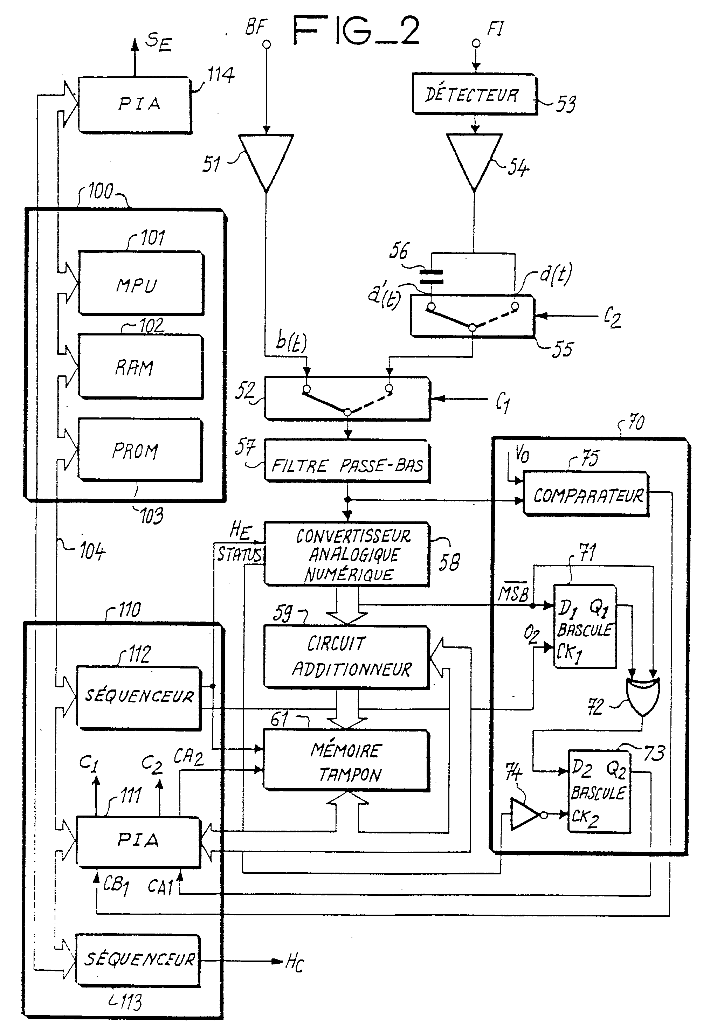

La figure 2 représente le schéma détaillé du circuit de gestion 50.

Sur cette figure, l'entrée basse fréquence BF du circuit de gestion est reliée à l'entrée d'un amplificateur 51 dont la sortie fournit le signal démodulé amplifié, b(t). La sortie de cet amplificateur est reliée à une première entrée d'un commutateur 52 ayant une entrée de commande $C_1$. L'entrée à fréquence intermédiaire FI est reliée à l'entrée d'un détecteur d'enveloppe 53 dont la sortie fournit un signal a(t) caractéristique de l'enveloppe du signal à fréquence intermédiaire régulé. Ce signal est appliqué à l'entrée d'un amplificateur 54 dont la sortie est reliée aux entrées d'un commutateur 55, d'une part par une voie directe, d'autre part par une voie comportant une capacité 56 qui permet de centrer le signal détecté sur une composante moyenne choisie. Le choix entre le signal d'enveloppe non centré a(t) et le signal d'enveloppe centré a't() est réalisé par commande appliquée à l'entrée $C_2$ du commutateur 55 ; le choix entre le signal d'enveloppe détecté (centré ou non centré) et le signal à basse fréquence b(t) est réalisé comme indiqué ci-dessus par l'intermédiaire du commutateur 52.

Le signal à traiter est donc présent à la sortie du commutateur 52. Cette sortie est reliée à l'entrée d'un filtre passe-bas de type Bessel 57 de fréquence de coupure égale à 1 KHz. La sortie de ce filtre est reliée à l'entrée d'un convertisseur analogique-numérique 58 dont le rôle est d'échantillonner le signal à traiter a(t), a'(t), ou b(t), à une fréquence d'échantillonnage $F_E$ appliquée au convertisseur sur l'entrée d'horloge $H_E$. La sortie multiple de ce convertisseur analogique-numérique est reliée à la première entrée d'un circuit additionneur 59 dont la sortie multiple est reliée à l'entrée correspondante d'une mémoire tampon 61. La sortie de cette mémoire tampon est reliée d'une part à la seconde entrée multiple du circuit additionneur 59, d'autre part à une entrée, dite entrée de données, d'un circuit de commande 110. Le convertisseur 58 dispose d'une sortie d'état « STATUS » reliée à une entrée d'horloge de mise en mémoire de la mémoire tampon 61, cette mémoire ayant également une entrée de remise à zéro, $CA_2$.

Le fonctionnement de cet ensemble est commandé par un calculateur 100 comportant une unité de traitement MPU, 101, une mémoire morte RAM, 102, et une mémoire de programme PROM, 103, ces moyens étant reliés ensemble par un bus de liaison 104. Ce bus 104 transmet également les commandes au circuit de commande 110 qui comporte un circuit d'interface PIA, 111, qui reçoit des signaux d'interruptions $CA_1$ ou $CB_1$ et fournit les signaux de commande $C_1$, $C_2$ et $CA_2$, un séquenceur 112 qui fournit en particulier l'horloge d'échantillonnage $H_E$ au convertisseur analogique-numérique 58, et enfin un séquenceur 113 qui délivre le signal d'horloge de commutation $H_C$ au commutateur 30 relié aux sorties du coupleur hybride 20 (voir figure 1). Le bus 104 est également relié à un circuit d'interface de sortie PIA, 114, délivrant le signal d'écartométrie au circuit de commande 60 des lignes à retard (figure 1).

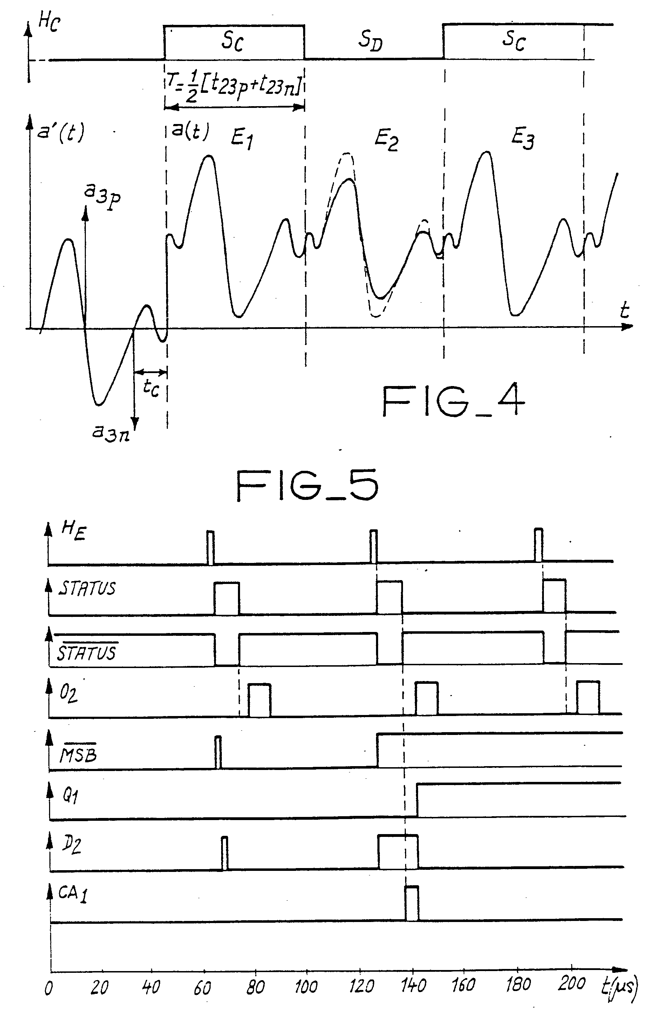

Le circuit de gestion comporte enfin un circuit logique 70 ayant une entrée reliée à la sortie du convertisseur analogique donnant le signe de l'échantillon prélevé dans le signal, MSB, une entrée reliée à une sortie de commande du séquenceur 112, et des sorties reliées à des entrées correspondantes du circuit d'interface PIA, 111 ; le rôle de ce circuit 70 est en particulier la détection des passages à zéro du signal de parole pour la mesure de la période de mélodie en mode $A_{3J}$ et la détection des interruptions de signal en mode $A_1$. Une description détaillée de ce circuit 70 ainsi qu'une description précise des signaux de commande nécessaires au fonctionnement du circuit de gestion sera donnée ci-après dans la description du fonctionnement du circuit de gestion, en liaison avec le chronogramme des signaux de commande représenté sur la figure 4.

Comme indiqué ci-dessus, le radiogoniomètre suivant l'invention fonctionne en mode $A_{3J}$ sur la base de la mesure de la période de mélodie. Le procédé d'acquisition de la période de mélodie utilisé dans ce radiogoniomètre peut être celui décrit dans la demande de brevet français FR-A-2494017 au nom de la Demanderesse. Le procédé consiste à détecter la période de mélodie dans la parole à partir d'un ensemble réduit de données mesurées sur le signal reçu. Cet ensemble de données est composé de mesures $a_i$ de l'énergie dans les alternances successives de ce signal, et de mesures $t_i$ associées des durées de ces alternances. Une procédure de test est mise en œuvre sur ces données pour la mesure de la période de mélodie : une phase d'acquisition constituée d'une première série de tests confère, lorsqu'elle est vérifiée, un caractère acquis au voisement et aboutit au calcul d'une première valeur de période de mélodie, et une phase de validation constituée d'une seconde série de tests confirme, lorsqu'elle est vérifiée, le caractère acquis du voisement et aboutit à l'actualisation de la valeur de la période de mélodie. Suivant le procédé décrit dans le brevet mentionné ci-dessus, la phase d'acquisition de la fréquence de mélodie consiste à détecter dans le signal de parole trois groupes de deux alternances successives dont les énergies $(a_{1p}, a_{1n})$, $(a_{2p}, a_{2n})$, $(a_{3p}, a_{3n})$ représentées par des vecteurs sur le diagramme d'un exemple de signal de parole représenté sur la figure 3, et les intervalles de temps correspondant entre alternances retenues de même signe, $(t_{12p}, t_{12n})$, $(t_{23p}, t_{23n})$, également indiqués sur la figure 3, répondent à l'ensemble de critères indiqués ci-dessous :

$$1 : a_{1p} > S_p ; \quad a_{1n} > S_n .$$

$$2 : a_{2p} > \text{MAX} \left( \frac{3}{4} a_{1p} ; S_p \right) ; \quad a_{2n} > \text{MAX} \left( \frac{3}{4} a_{1n} ; S_n \right) ; \quad |t_{12p} - t_{12n}| < t_{pn} ; \quad t_{12p} < T_M ; \quad \text{et} \quad t_{12n} < T_M .$$

$$3 : a_{3p} > \text{MAX} \left( \frac{13}{16} (a_{2p} + (a_{2p} - a_{1p})) ; S_p \right)$$

$$a_{3n} > \text{MAX} \left( \frac{13}{16} (a_{2n} + (a_{2n} - a_{1n})) ; S_n \right)$$

$$|t_{23p} - t_{23n}| < t_{pn} ; \quad t_{23p} < T_M ; \quad t_{23n} < T_M ; \quad |t_{23p} - t_{12p}| < \Delta t ; \quad t_{23n} - t_{12n} \Delta t .$$

où $S_p$, $S_n$, $t_{pn}$, $\Delta t$ et $T_M$ sont des valeurs de seuil fixées par le traitement.

Dans le radiogoniomètre suivant l'invention cette phase d'acquisition de la période de mélodie est la même et est suivie par une phase de mesure du signal d'écartométrie et de validation qui est en même temps une phase de vérification du maintien du caractère voisé de la parole.

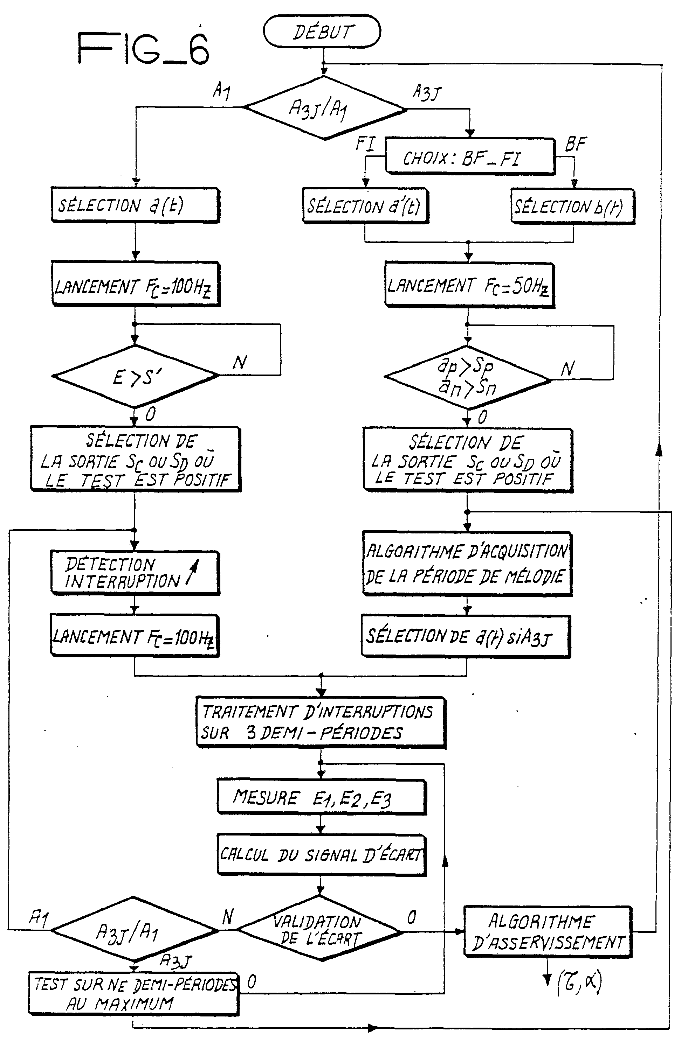

Les figures 4, 5 et 6 permettent d'expliquer le fonctionnement du radiogoniomètre suivant l'invention. La figure 4 représente le signal traité, c'est-à-dire d'abord l'enveloppe centrée $a'(t)$ d'un signal à fréquence intermédiaire modulé en $A_{3J}$ par un signal de parole puis, après la phase d'acquisition, le signal d'enveloppe non centré $a(t)$. Comme indiqué ci-dessus, ce signal d'enveloppe a des caractéristiques de fréquence analogues à celles du signal de parole. Sur le diagramme de la figure 4, il est supposé qu'après une durée $t_c$ suivant la mesure de la dernière valeur d'énergie $a_{3n}$, la première mesure de la période de mélodie a été calculée par le processeur. L'organigramme de la figure 6 permet de schématiser les différentes étapes du procédé de traitement mises en œuvre dans le radiogoniomètre suivant l'invention, une première branche de cet organigramme correspond au traitement effectué pour un signal de type $A_{3J}$, tandis qu'une seconde branche, ayant certaines étapes communes avec la première, correspond au traitement effectué pour un signal de type $A_1$.

Dans une première phase, dite d'acquisition, la présence de signal est détectée et les caractéristiques de ce signal sont acquises. Pour cela, l'opérateur détermine le mode de transmission. Si le mode de transmission est $A_{3J}$, l'opérateur choisit entre un traitement du signal BF ou un traitement du signal FI, par commande du commutateur 52 par $C_1$. En BF, c'est toujours le signal $b(t)$ qui est sélectionné. En FI, dans cette première phase, c'est le signal à fréquence intermédiaire régulé $a'(t)$ qui est sélectionné par commande du commutateur 55 par $C_2$. Ces sélections étant réalisées, pour obtenir les premières mesures, le processeur commande la commutation des deux sorties du coupleur hybride à quadrature à un rythme fixe, soit par exemple à une fréquence de commutation $F_C = 50$ Hz. Les énergies entre passages à zéro $a_i$ sont alors calculées. Ce calcul est réalisé en additionnant les échantillons à la fréquence d'échantillonnage, soit 16 kHz par exemple, prélevés sur le signal entre deux passages à zéro, ces passages à zéro étant détectés par le changement de signe des échantillons. Tant qu'aucune énergie mesurée n'est supérieure au seuil prédéterminé correspondant $S_p$ ou $S_n$, aucun signal de parole n'est considéré comme présent. Lorsque l'énergie dans une alternance devient supérieure au seuil correspondant, le commutateur 30 des sorties du coupleur est maintenu dans la position qu'il avait au moment du dépassement, ceci pour éviter d'effectuer l'acquisition de la période de mélodie sur la sortie du coupleur où l'énergie est réduite par la combinaison des phases dans le coupleur. La phase d'acquisition de la période de mélodie suivant le procédé décrit dans le brevet en référence ci-dessus, est alors réalisée.

Lorsque la période de mélodie est acquise, c'est-à-dire qu'une valeur de cette période, $T = 1/2 (t_{23p} + t_{23n})$ a été calculée, le processeur commande une seconde phase du traitement dite phase d'analyse. Lorsque le traitement a lieu en BF, il n'y a pas de changement mais lorsque ce traitement a lieu en FI, le processeur commande d'abord la commutation, par l'entrée $C_2$, du commutateur 55 pour l'analyse du signal a(t), signal d'enveloppe à fréquence intermédiaire non centré. Puis, le processeur commande la commutation des sorties du coupleur hybride à quadrature par un signal carré $H_C$ à une période double de la période de mélodie, de façon que chaque sortie soit prise en compte pendant une durée T égale à la période de mélodie. Cette commutation est réalisée sur trois demi-périodes de commutation successives (voir figure 4). En effet, une mesure du signal d'écart est obtenue à partir des mesures des énergies dans trois périodes de mélodie successives, deux mesurées sur une antenne et une mesurée sur l'autre. Les énergies dans chaque période de mélodie, $T_i$, i = 1, 2, 3, sont mesurées en FI par sommation de tous les échantillons de signal prélevés dans cette période, et en BF par sommation des valeurs absolues de tous les échantillons prélevés dans cette période. Les énergies $E_1$ et $E_3$ sont mesurées sur la même sortie du coupleur hybride alors que $E_2$ est mesurée sur l'autre sortie du coupleur. Une valeur E d'écartométrie est alors calculée à partir de ces trois énergies : cette valeur d'écartométrie est $E = 1/2 ((E_1 - E_2) + (E_3 - E_2))$.

Dans le cas de signaux avec porteuse, l'acquisition du signal d'écartométrie était faite par rapport à une référence qui était le niveau de régulation de la porteuse. Au contraire l'acquisition du signal d'écartométrie est faite ici sans référence de niveau. Il est donc nécessaire de normaliser la valeur calculée E en la rapportant à l'énergie réelle reçue, $E_r$, normalisée par l'énergie maximum qui peut être reçue $E_{max}$ sur une période de commutation. Le signal d'écartométrie $S_E$ qui sera transmis au circuit de commande des lignes à retard sera donc la fonction de la valeur normalisée E' telle que :

$$E' = E \cdot \frac{E_{max}}{E_r}, \quad \text{où } E_r \text{ est donnée par :}$$

$$E_r = \frac{E_1 + E_3}{2} + E_2$$

Une troisième phase, dite de validation, est alors commandée par le processeur. Pour cela, un test de validation sur les énergies $E_1$, $E_2$, $E_3$, est réalisé. La validation n'est obtenue que si $E_3 - E_1$ est inférieure à une valeur de seuil, e, et si $E_1$ et $E_3$ sont supérieures à un seuil S. Ces conditions traduisent la continuité de la périodicité de l'énergie c'est-à-dire le maintien du signal et l'entretien de son caractère voisé. Le circuit de gestion fournit le signal d'écart correspondant $S_E$ au circuit de commande 60 des lignes à retard ; cette commande permet de ramener à zéro la différence d'énergie entre les deux entrées du coupleur hybride, différence qui comme il a été indiqué ci-dessus est directement liée à l'écart de temps d'arrivée. Lorsque la position d'équilibre est obtenue, E = 0 et le décalage entre les deux lignes à retard 10 et 11 annule l'écart de temps d'arrivée $\tau = (d \sin \alpha)/c$. Ce retard étant directement lié à l'angle d'arrivée $\alpha$ de l'émission, il est possible de lire directement la direction de l'émission radioélectrique.

Lorsque le test de validation est négatif, un aiguillage fonction du mode de transmission est effectué. Cet aiguillage permet d'effectuer à nouveau le test de validité sur un autre groupe de trois demi-périodes de commutation successives, sur la base de la période de mélodie acquise antérieurement et ceci tant qu'un nombre prédéterminé N de demi-périodes n'a pas été testé. Si à la fin de l'analyse de ce nombre prédéterminé N de demi-périodes aucun des tests n'a été positif, le processeur commande une nouvelle acquisition de la période de mélodie. Si par contre, au cours de cette analyse un test de validité est positif, la valeur d'énergie E' d'écartométrie est utilisée pour générer un signal d'écart $S_E$.

Les signaux permettant la commande des différents moyens du circuit de gestion décrits en référence à la figure 2 pour obtenir le fonctionnement décrit ci-dessus en mode $A_{3J}$ en référence à l'organigramme de la figure 6, sont représentés sur la figure 5. Le séquenceur 112 délivre le signal d'horloge d'échantillonnage $H_E$ au convertisseur analogique-numérique donnant les valeurs d'échantillons sur 8 bits. $H_E$ peut être constitué par exemple d'impulsions à la fréquence 16 KHz. La sortie binaire du convertisseur analogique-numérique est reçue sur l'additionneur 59 ; l'addition se fait sur 12 bits par exemple entre la sortie du convertisseur et la sortie de la mémoire tampon 61 utilisée pour mettre en mémoire le résultat de l'addition précédente. Cette méthode permet d'élaborer la somme de plusieurs échantillons successifs en sortie du convertisseur entre deux interruptions caractérisées par des impulsions $CA_1$ sur l'entrée correspondante du PIA 111. La mémoire tampon, constituée de bascules de type D, dispose d'une entrée d'horloge reliée, comme indiqué ci-dessus, à la sortie d'état « status » du convertisseur ; l'état 1 de ce signal indique les périodes durant lesquelles le convertisseur réalise une opération de conversion. Une nouvelle valeur est donc présente sur le front descendant de cette sortie « status ». Le résultat d'une addition est mis en mémoire dans la mémoire tampon 61 sur le front montant du signal HE. Le circuit additionneur comporte trois additionneurs de 4 bits, ces additionneurs étant câblés pour donner le résultat de l'addition en complément à 2 et les données issues du convertisseur analogique étant également données en complément à 2 sur 8 bits. La valeur en complément à 2 sur 12 bits à l'entrée de l'additionneur est obtenue par câblage des 8 bits du convertisseur analogique-numérique sur les 8 bits de poids faible des additionneurs, les 4 bits de poids fort des additionneurs étant tous reliés à une sortie MSB donnant le signe de l'échantillon à la sortie du convertisseur. Le résultat de l'addition est ainsi obtenu en complément à 2.

Pendant la phase d'acquisition de la période de mélodie la mesure de l'énergie $a_i$ ($a_{ip}$ ou $a_{in}$) du signal entre deux passages à zéro, est obtenue en additionnant les échantillons entre deux interruptions générées par les passages à zéro du signal comme décrit dans la demande de brevet mentionnée ci-dessus. Le circuit logique 70 (figure 2) est conçu pour permettre cette mesure d'énergie du signal entre passages à zéro. La détection de passage à zéro est réalisée en comparant le signe d'un échantillon avec le signe d'un échantillon précédent, au moyen de la sortie MSB. Pour cela, le signal MSB est mis en mémoire au moyen d'une première bascule 71, sur le front montant d'une impulsion positive de durée 7 microsecondes, apparaissant 11 microsecondes après le front descendant du signal d'état status du convertisseur analogique-numérique. Ce signal de commande de mise en mémoire de la bascule 71 appliqué à l'entrée d'horloge $CK_1$ de cette bascule est le signal $O_2$ représenté sur la figure 5. Le signe est susceptible de changer après chaque conversion, c'est-à-dire sur les fronts descendants du signal d'état status. Le signal MSB représenté sur la figure 5 représente un exemple de changement d'état, une impulsion courte traduisant un faux changement de signe ne devant pas être pris en compte tandis qu'un changement de signe réel se traduit par un changement d'état de la sortie MSB. Pour la comparaison des signes de deux échantillons successifs, l'entrée et la sortie de la bascule 71 sont reliées aux deux entrées d'une porte OU exclusif 72 dont la sortie est elle-même reliée à l'entrée d'une seconde bascule 73. Cette bascule génère des impulsions lors des changements de signe du signal, pour cela l'entrée d'horloge $CK_2$ de la bascule 73 est reliée à la sortie d'un inverseur 74 recevant le signal d'état. La sortie $Q_2$ de la bascule 73 passe donc à 1 après un changement de signe, sur le front montant du signal d'état inversé $CK_2$, et revient à zéro sur le front montant des impulsions du signal $CK_1$. Le signal à la sortie $Q_2$ est un signal d'interruption $CA_1$ appliqué au circuit d'interface 111 qui commande la lecture de la mémoire tampon 61. Cette lecture est suivie d'une remise à zéro de la mémoire tampon par une impulsion négative fournie par la sortie $CA_2$ du PIA 111, de durée de 1 microseconde, qui suit la lecture de la mémoire tampon. Durant cette phase d'acquisition, le séquenceur 112 génère en permanence les impulsions à la fréquence d'échantillonnage, $H_E$, et le séquenceur 113 commute les sorties du coupleur à fréquence fixe, soit 50 Hz comme indiqué ci-dessus.

Pour la phase d'analyse, après l'acquisition de la période de mélodie, le nombre $N_E$ d'échantillons à additionner durant une demi-période de commutation est fonction d'une part de la fréquence d'horloge d'échantillonnage, d'autre part de la fréquence de commutation. Ce nombre est mis en mémoire par le processeur dans un compteur du séquenceur 112. Dans cette phase, chaque front descendant de l'horloge génère une conversion sur le convertisseur analogique-numérique et décrémente le compteur du séquenceur, la mise à zéro de ce compteur commandant la lecture de la valeur d'une mesure d'énergie $E_i$ ainsi réalisée et un nouveau chargement du compteur du séquenceur par la valeur $N_E$. Ce type de comptage est réalisé pendant toute la phase de maintien du signal voisé, pour la mesure des énergies $E_i$ et le calcul du signal d'écartométrie $S_E$.

Compte tenu du fait que le circuit de gestion peut travailler « en interruption », ce système est également adapté à la détermination de la direction d'une émission radioélectrique en modulation d'amplitude par tout ou rien. En effet la procédure peut être analogue, la comparaison étant faite entre les énergies recueillies sur les deux sorties du coupleur à quadrature, commutées, non plus à la fréquence de mélodie, ce qui n'aurait aucun sens dans ce type de transmission, mais à un rythme fixe tant qu'aucune interruption de présence du signal due à la modulation n'est détectée.

Le traitement représenté sur l'organigramme de la figure 6 s'effectue donc, en mode $A_1$, en sélectionnant dans une première phase le signal a(t) qui est l'enveloppe détectée du signal à fréquence intermédiaire non centré reçu de la sortie FI du récepteur, par commande des commutateurs 52 et 55, ce signal étant filtré par le filtre de Bessel 57. Pour détecter la présence de signal, la commutation des sorties du coupleur est commandée dans cette première phase à la fréquence $F_C = 100$ Hz. Pour cela, l'énergie sur chaque voie est calculée en additionnant les échantillons à la fréquence d'échantillonnage prélevés durant une demi période de commutation. Tant que l'énergie sur une demi période de commutation reste inférieure à un seuil, S' par exemple, le processeur en conclut que le signal est absent. Dès qu'il est en présence d'une énergie supérieure au seuil S', le processeur en conclut la présence de signal et commande le positionnement du commutateur 30 (figure 1) sur la sortie correspondante du coupleur hybride, en attente d'un signal d'interruption caractéristique d'une transition du signal. Cette interruption est fournie par un comparateur 75 prévu à cet effet dans le circuit logique 70. Pour cela, la sortie du filtre passe-bas est reliée à la première entrée de ce comparateur 75, l'autre entrée recevant une tension de référence $V_0$. Dès que l'amplitude du signal est supérieure ou inférieure à $V_0$, c'est-à-dire pour toutes les transitions du signal démodulé et filtré, le comparateur est déclenché. Mais seuls les fronts montants sont

7

pris en compte par le processeur. Le signal d'interruption présent à la sortie du comparateur est appliqué à l'entrée CB1 du PIA 111, ce circuit étant programmé pour déclencher une impulsion sur le front montant de CB1, qui commande par la sortie $H_c$ du séquenceur 113, la commutation des sorties du coupleur hybride à un rythme fixe, soit $F_C = 100$ Hz.

Pour la seconde phase dite phase d'analyse, le procédé est le même que celui décrit ci-dessus pour un signal modulé en bande latérale unique sans porteuse, c'est-à-dire que trois demi-périodes de commutation sont considérées. Les trois énergies correspondantes $E_1$, $E_2$, $E_3$ sont mesurées alternativement sur les deux sorties du coupleur et un signal d'écartométrie caractéristique de la différence des niveaux des porteuses sur ces deux sorties est calculé.

Dans la troisième phase, le même test de validation que lors du traitement d'un signal modulé de type $A_{3J}$ permet de vérifier la continuité du signal. Mais dès qu'un test échoue le processeur se replace en attente d'une interruption montante caractéristique de la présence du signal.

L'invention n'est pas limitée au mode de réalisation décrit ci-dessus en référence aux figures. En particulier, la configuration particulière des circuits décrits peut être modifiée tout comme le circuit logique de commande ou la fréquence d'échantillonnage $H_E$ appliquée au convertisseur analogique-numérique. De plus, dans la description ci-dessus, il a été indiqué que le signal d'écart était calculé à partir des mesures d'énergie dans trois demi-périodes successives par différence de la demi-somme des première et troisième $((E_1 + E_3)/2)$ et de la deuxième $E_2$. Il serait également possible de modifier le nombre de demi-périodes considérées en l'augmentant par exemple à 4 et en faisant la différence entre la demi-somme des première et troisième mesures $(E_1 + E_2)/2$ et la demi-somme des deuxième et quatrième mesures $(E_2 + E_4)/2$.

L'invention a été décrite comme particulièrement applicable à la réception de signaux de type $A_{3J}$ ou $A_1$ car ces signaux ne pouvaient pas être traités dans les systèmes antérieurs. Mais le dispositif de radiogoniométrie suivant l'invention est susceptible de traiter n'importe quel type de signal modulé en amplitude (type $A_3$), par un signal de parole selon le même procédé de traitement, c'est-à-dire en mesurant les énergies sur les sorties d'un coupleur commutées à un rythme double de la période de mélodie, le signal d'erreur nétant validé qu'après vérification de la continuité du signal.

## Revendications

1. Procédé de radiogoniométrie utilisant un radiogoniomètre à écart de temps d'arrivée, monocanal, le radiogoniomètre comportant une base de mesure formée de deux antennes (A, B) reliées aux entrées d'un coupleur hybride à quadrature (20) par l'intermédiaire de lignes à retard commandables (10, 11), un récepteur (40), un circuit de commande des lignes à retard (60), un circuit de gestion (50) et un commutateur (30), le procédé comprenant les étapes suivantes : les sorties du coupleur sont alternativement reliées à l'entrée du récepteur (40) par l'intermédiaire du commutateur (30) qui est commandé par un signal de commutation ($H_C$), le circuit de gestion (50) génère le signal de commutation et traite un signal prélevé dans le récepteur pour élaborer un signal d'écartométrie ($S_E$) fonction de la différence des énergies mesurées sur le signal prélevé entre commutations successives, et le circuit de commande des lignes à retard (60) est commandé par ledit signal d'écartométrie, caractérisé en ce que le circuit de gestion (50) commande
   une phase de détection de présence du signal reçu pendant laquelle le commutateur relie alternativement les sorties du coupleur à l'entrée du canal de réception à un rythme fixe,
   une phase d'analyse du signal ainsi détecté pour générer ledit signal de commutation ($H_C$) synchronisé sur le signal détecté,
   et une phase de validation des mesures d'énergie pour confirmer la continuité du signal détecté conditionnant la génération du signal d'écartométrie
   et en ce qu'une phase d'analyse succède à une phase de validation positive, tandis qu'une nouvelle phase de détection succède à une phase de validation négative.

2. Procédé de radiogoniométrie selon la revendication 1, caractérisé en ce que, pour un signal BLU à porteuse supprimée modulé par un signal de parole, la détection de présence de signal reçu résulte de la mesure sur le signal prélevé dans le canal de réception d'une énergie supérieure à un seuil prédéterminé sur une demi période de commutation au rythme fixe, et de la mesure d'une période de mélodie dans ce signal détecté, et en ce que le rythme du signal de commande de commutation généré pendant la phase d'analyse est choisi égal au double de la période de mélodie précédemment mesurée, de façon que chaque signal de combinaison à la sortie du coupleur soit pris en compte pendant une période de mélodie.

3. Procédé de radiogoniométrie selon la revendication 2, caractérisé en ce que, pendant une phase d'analyse, le circuit de gestion commande la mesure des énergies $E_1$, $E_2$ et $E_3$ durant trois périodes de mélodie successives, $E_1$ et $E_3$ étant mesurées lorsque le commutateur relie l'une des sorties du coupleur de présence à l'entrée du canal de réception et $E_2$ étant mesurée lorsque l'autre sortie du coupleur est reliée à ce canal, la phase de validation étant positive lorsque le test de validation suivant est vérifié :
   — la différence d'énergie $(E_3 - E_1)$ est inférieure à un seuil e ;
   — les énergies $E_3$ et $E_1$ sont supérieures à un seuil S ;

EP 0 148 672 B1

et caractérisé en ce que le signal d'écartométrie est proportionnel à $(E_1 + E_3)/2 - E_2$.

4. Procédé de radiogoniométrie selon la revendication 3, caractérisé en ce que le circuit de gestion effectue à nouveau le même test de validation, jusqu'à un nombre maximum prédéterminé de périodes de mélodie au rythme précédemment mesuré en cas d'échec d'un test de validation, la phase de validation étant négative lorsque le nombre maximum de périodes a été testé, la phase de validation étant positive et le signal d'écartométrie étant transmis au circuit de commande des lignes à retard (60) dès qu'un test de validation est vérifié.

5. Procédé de radiogoniométrie selon l'une quelconque des revendications 2 à 4, caractérisé en ce que la reconnaissance d'une période de mélodie est obtenue lorsque les énergies dans trois groupes de deux alternances successives du signal prélevé $(a_{1p}, a_{1n})$, $(a_{2p}, a_{2n})$, $(a_{3p}, a_{3n})$ et les intervalles de temps correspondant entre alternances de même signe $t_{12p}$, $t_{12n}$, $t_{23p}$, $t_{2n}$ répondent à l'ensemble de critères suivants :

$$- a_{1p} > S_p \; ; \quad a_{1n} > S_n \; ;$$

$$- a_{2p} > MAX \left( \frac{3}{4} a_{1p} \; ; S_p \right) \; ; \quad a_{2n} > MAX \left( \frac{3}{4} a_{1n} \; ; S_n \right) \; ; \quad |t_{12p} - t_{12n}| < t_{pn} \; ; \quad t_{12p} < T_M \text{ et } t_{12n} < T_M \; ;$$

$$- a_{3p} > MAX \left( \frac{13}{16} (a_{2p} + (a_{2p} - a_{1p})) \; ; \; S_p \right)$$

$$a_{3n} > MAX \left( \frac{13}{16} (a_{2n} + a_{1n}) \; ; \; S_n \right)$$

$$|t_{23p} - t_{23n}| < t_{pn} \; ; \quad |t_{23p} - t_{12p}| < \Delta t \; ; \quad |t_{23n} - t_{12n}| < \Delta t \quad \text{et} \quad t_{23p} < T_M \text{ et } T_{23n} < T_M \, ,$$

$S_p$, $S_n$, $t_{pn}$, $\Delta t$ et $T_M$ étant des valeurs de seuil prédéterminées, la mesure de la période de mélodie étant alors $1/2 (t_{23p} + t_{23n})$.

6. Procédé de radiogoniométrie selon la revendication 1, caractérisé en ce que, pour un signal reçu modulé par un signal à deux niveaux, le circuit de gestion (50) décide la présence de signal reçu en comparant le niveau du signal prélevé à un niveau prédéterminé, $V_0$, le signal de commutation généré pendant la phase d'analyse ayant une fréquence fixe et étant interrompu lors des interruptions de signal.

7. Procédé de radiogoniométrie selon la revendication 6, caractérisé en ce que pendant une phase de mesure, le circuit de gestion commande la mesure de l'énergie du signal prélevé alternativement pour chaque sortie dans trois demi-périodes de commutation successives, soient $E_1$, $E_2$ et $E_3$ ces énergies mesurées, $E_1$ et $E_3$ étant mesurées lorsque le commutateur (30) relie l'une des sorties du coupleur à l'entrée du canal de réception et $E_2$ étant mesurée lorsque l'autre sortie du coupleur est reliée à ce canal, la phase de validation étant positive respectivement négative selon que le test de validation suivant est, respectivement n'est pas, vérifié :

$(E_3 - E_1)$ inférieure à un seuil e ;

$E_3$ et $E_1$ supérieures à un seuil S ;

et caractérisé en ce que le signal d'écartométrie est proportionnel à $(E_1 - E_3)/2 - E_2$.

8. Procédé de radiogoniométrie selon l'une quelconque des revendications précédentes, caractérisé en ce que le signal prélevé dans le canal de réception est choisi entre le signal démodulé et le signal à fréquence intermédiaire, les moyens de traitement comportant un détecteur (53) pour le signal à fréquence intermédiaire, des moyens d'amplification (51, 54), des moyens de centrage (56) de la composante moyenne pour le signal à fréquence intermédiaire, et un filtre passe-bas (57).

9. Radiogoniomètre à écart de temps d'arrivée, monocanal comportant une base de mesure formée de deux antennes (A, B) reliées aux entrées d'un coupleur hybride à quadrature (20) par l'intermédiaire de lignes à retard commandables (10, 11), les sorties du coupleur étant alternativement reliées à l'entrée d'un récepteur (40) via un commutateur (30), et un circuit de gestion (50) générant un signal de commutation $H_C$ appliqué au commutateur et traitant un signal prélevé dans le récepteur pour générer un signal d'écartométrie $(S_E)$ fonction de la différence des énergies mesurées, entre commutations successives, sur le signal prélevé, un circuit de commande des lignes à retard (60) commandé par le signal d'écartométrie, caractérisé en ce que le circuit de gestion comporte une entrée de signal démodulé (BF) et une entrée de signal à fréquence intermédiaire (FT) reliées au récepteur, respectivement reliées aux entrées d'un commutateur (52) via un amplificateur (51) pour le premier (BF), via un détecteur (53), un amplificateur (54) et des moyens de centrage de composante continue (56) pour le second (FI), la sortie du commutateur (52) étant reliée à un filtre passe-bas (57) suivi de moyens de traitement délivrant le signal de commutation $H_C$ synchronisé sur le signal détecté, en présence de signal démodulé (BF).

**Claims**

1. A radiogoniometric method utilizing a single channel radiogoniometric with a shift in the arrival time, the radiogoniometer comprising a measuring base formed by two antennas (A and B) connected

9

EP 0 148 672 B1

with the inputs of a hybrid quadrature coupler (20) by the intermediary of controllable delay lines (10 and 11), a receiver (40), a control circuit for the delay lines (60), a managing circuit (50) and a switch (30), the said method comprising the following stages ; the outputs of the coupler are alternatively connected with the input of the receiver (40) by the intermediary of the switch (30) which is controlled by a switching signal (Hc), the managing circuit (50) generates the switching signal and acts on the signal received in the receiver in order to produce a directional error signal (Se) as a function of the difference of the energy measured for the signal received between successive switching, and the control circuit for the delay lines (60) is controlled by the said directional error signal, characterized in that the managing circuit (50) produces :

a phase for the detection of the received signal during which the switch alternatively connects the outputs of the coupler with the input of the reception channel in a fixed rhythm,

a phase of analysis of the signal so detected in order to generate the said switching signal (Hc) synchronized with the detected signal,

and a phase for the validation of the energy measurements in order to confirm the continuity of the detected signal conditioning the generation of the directional error signal, and in that an analysis phase follows a positive validation phase, whereas a new detection phase follows a negative validation phase.

2. The radiogoniometric method as claimed in claim 1, characterized in that in the case of speech modulated SSB with a suppressed carrier, the detection of the presence of the sampled signal results from the measurement performed on the signal received in the reception channel of an amount of energy greater than a predetermined threshold with respect to a half period of switching at the fixed rhythm, and the measurement of a melodic period in this detected signal, and in that the rhythm of the switching control signal generated during the analysis phase is selected so as to be equal to the preceding melodic period measured so that each combination signal at the output of the coupler is taken into account during a melodic period.

3. The radiogoniometric method as claimed in claim 2, characterized in that during an analysis phase, the managing circuit causes the measurement of amounts of energy $E_1$, $E_2$ and $E_3$ during three successive melodic periods, $E_1$ and $E_3$ being measured when the switch is connecting one of the outputs of the presence coupler with the input of the reception channel and $E_2$ being measured when the other output of the coupler is connected with this channel, the phase of validation being positive if the following validation test has a positive result :

the difference in energy ($E_3 - E_1$) is less than a threshold e ;

the amounts of energy $E_3$ and $E_1$ are greater than a threshold S ; and characterized in that in that the directional error signal is proportional to $((E_1 + E_3)/2) - E_2$.

4. The radiogoniometric method as claimed in claim 3, characterized in that the managing circuit performs the same validation test up to a maximum predetermined number of melodic periods with the preceding rhythm measured in the case of a halt of a validation test, the validation phase being negative when the maximum number of periods has been tested and the validation phase being positive and the directional error signal being transmitted to the control circuit for the delay lines (60) as soon as a validation test has been verified.

5. The radiogoniometric method as claimed in any one of the claims 2 through 4, characterized in that the recognition of melodic period is established when the amounts of energy in the three groups of two successive alternations of the sampled signal $(a_{1p}, a_{1n})$ $(a_{2p}, 1_{2n})$, $(1_{3p}, a_{3n})$ and the corresponding time intervals between alternations of the same sign $t_{12p}$, $t_{12n}$, $t_{23p}$, $t_{2n}$ correspond to the following criteria :

$$- a_{1p} > S_p ; \quad a_{1n} > S_n ;$$

$$- a_{2p} > MAX \left( \frac{3}{4} a_{1p} ; S_p \right) ; \quad a_{2n} > MAX \left( \frac{3}{4} a_{1n} ; S_n \right) ; \quad |t_{12p} - t_{12n}| < t_{pn} ; \quad t_{12p} < T_M \ et \ t_{12n} < T_M ;$$

$$- a_{3p} > MAX \left( \frac{13}{16} (a_{2p} + (a_{2p} - a_{1p})); \ S_p \right)$$

$$a_{3n} > MAX \left( \frac{13}{16} (a_{2n} + a_{1n}) ; \ S_n \right)$$

$$|t_{23p} - t_{23n}| < t_{pn} ; \quad |t_{23p} - t_{12p}| < \Delta t ; \quad |t_{23n} - t_{12n}| < \Delta t \quad et \quad t_{23p} < T_M \ et \ T_{23n} < T_M ,$$

and $t_{23p} < T_M$ and $T_{23n} < T_M$, wherein $S_p$, $S_n$, $t_{pn}$, $\Delta t$ and $T_M$ are predetermined threshold values, the measurement and the melodic period then being $1/2(t_{23p} + t_{23n})$.

6. The radiogoniometric method as claimed in claim 1, characterized in that for a received signal modulated by a two level signal, the managing circuit (50) makes a decision on the presence of the received signal by comparing the level of the signal sampled at a predetermined level, $V_0$, the switching signal generated during the phase of analysis having a fixed frequency and being interrupted at the time of interruption of the signal.

7. The radiogoniometric method as claimed in claim 6, characterized in that during a measurement

10

phase the managing circuit causes the measurement of the energy of the sampled signal alternatively so that for each output in three half periods of successive switching the measured amounts of energy are $E_1$, $E_2$ and $E_3$, $E_1$ and $E_3$ being measured when the switch (30) connects one of the outputs of the coupler with the input of the reception channel and $E_2$ being measured when the other output of the coupler is connected with this channel, the phase of validation being positive and, respectively, negative if the following validation test is or, respectively, is not verified :

$(E_3 - E_1)$ less than a threshold e ;

$E_3$ and $E_1$ greater than a threshold S ;

an characterized in that the directional error signal is proportional to $(E_1 + E_3)/2 - E_2$.

8. The radiogoniometric method as claimed in any one of the preceding claims, characterized in that the signal sampled in the reception channel is selected as either the demodulated signal or the intermediate frequency signal, the processing means comprising a detector (53) for the intermediate frequency signal, amplification means (51 and 54), centering means (56) for the mean component for the intermediate frequency signal and a low pass filter (57).

9. A single channel radiogoniometer with a shift in the arrival time comprising a measurement base formed by two antennas (A and B) connected with the inputs of a hybrid quadrature coupler (20) by the intermediary of controllable delay lines (10 and 11), the outputs of the coupler being alternatively connected with the input of a receiver (40) via a switch (30), and a managing circuit (50) generating a switch signal $H_C$ applied to the switch and processing a signal sampled in the receiver in order to generate a directional error signal (SE) which is a function of the difference in the amounts of energy measured, between successive switching operations, on the sampled signal, and a control circuit for the delay lines (60) controlled by the directional error signal, characterized in that the managing circuit comprises a demodulated signal input (BF) and an intermediate frequency signal input (FT) connected with the receiver, respectively connected with the inputs of a switch (52) via an amplifier (51) for the first one (BF), via a detector (53), an amplifier (54), and means for centering the continuous component (56) for the second one (FI), the output of the switch (52) being connected with low pass filter (57) followed by processing means delivering the switching signal $H_C$ synchronized with the detected signal, in the presence of a demodulated signal (BF).

## Patentansprüche

1. Verfahren zur Funkpeilung, worin ein Einkanal-Funkpeilgerät mit Auswertung der Ankunftszeitdifferenz verwendet wird, wobei das Funkpeilgerät eine Meßbasis umfaßt, die aus zwei Antennen (A, B) gebildet wird, die mit den Eingängen eines Quadratur-Hybridkopplers (20) über steuerbare Verzögerungsleitungen (10, 11) verbunden sind, einen Empfänger (40), einen Steuerschaltkreis für Verzögerungsleitungen (60), eine Hauptsteuerschaltung (50) und einen Schalter (30), wobei das Verfahren folgende Schritte beinhaltet : die Ausgänge des Kopplers werden abwechselnd mit dem Eingang des Empfängers (40) über den von einem Schaltsignal ($H_C$) gesteuerten Schalter (30) verbunden, die Hauptsteuerschaltung (50) erzeugt das Schaltsignal und verarbeitet ein im Empfänger entnommenes Signal, um ein Ablagemeßsignal ($S_E$) zu erzeugen, das von der Differenz der Energien abhängt, die am entnommenen Signal zwischen aufeinanderfolgenden Umschaltungen gemessen wurden, und der Steuerschaltkreis der Verzögerungsleitungen (60) wird von diesem Ablagemeßsignal gesteuert, dadurch gekennzeichnet, daß die Hauptsteuerschaltung (50) :

eine Phase der Erfassung des Vorhandenseins des empfangenen Signals steuert, während welcher der Schalter die Ausgänge des Kopplers abwechselnd mit dem Eingang des Empfangskanals in einem bestimmten Takt verbindet,

eine Phase der Analyse des so erfaßten Signals zur Erzeugung dieses Schaltsignals ($H_C$) steuert, das mit dem erfaßten Signal synchronisiert wird,

und eine Phase der Freigabe der Energiemeßwerte steuert, um die Kontinuität des erfaßten Signals zu bestätigen, welche die Erzeugung des Ablagemeßsignals bedingt, und dadurch, daß auf eine erfolgreiche Freigabephase eine Phase der Analyse folgt, während eine neue Erfassungsphase auf eine erfolglose Freigabephase folgt.

2. Verfahren zur Funkpeilung nach Anspruch 1, dadurch gekennzeichnet, daß für ein Einseitenbandsignal mit unterdrückter Trägerwelle, die durch ein Sprechsignal moduliert wird, sich die Erfassung des Vorhandenseins des empfangenen Signals aus der Messung an dem Signal ergibt, das im Empfangskanal mit einer höheren Energie als ein vorgegebener Grenzwert bei einer halben Schaltperiode im festgelegten Takt entnommen wurde, und aus der Messung einer Melodieperiode in diesem erfaßten Signal, und dadurch, daß der Takt des während der Analysephase erzeugten Steuerschaltsignals gleich dem Zweifachen der vorher gemessenen Melodieperiode ausgewählt wird, so daß jedes kombinierte Signal am Ausgang des Kopplers während einer Melodieperiode berücksichtigt wird.

3. Verfahren zur Funkpeilung nach Anspruch 2, dadurch gekennzeichnet, daß während einer Analysephase die Hauptsteuerschaltung die Messung der Energien $E_1$, $E_2$ und $E_3$ während drei aufeinanderfolgenden Melodieperioden steuert, wobei $E_1$ und $E_3$ dann gemessen werden, wenn der Schalter einen der Ausgänge des Präsenz-Kopplers mit dem Eingang des Empfangskanals verbindet und

$E_2$ gemessen wird, wenn der andere Ausgang des Kopplers mit diesem Kanal verbunden ist, wobei die Freigabephase erfolgreich ist, wenn der folgende Freigabetest bestanden wird :

die Differenz für die Energie $(E_3 - E_1)$ ist kleiner als der Grenzwert e ;

die Energien $E_3$ und $E_1$ sind größer als der Grenzwert S ; und dadurch gekennzeichnet, daß das Ablagemeßsignal proportional zu $E_1 + E_3/2 - E_2$ ist.

4. Verfahren zur Funkpeilung nach Anspruch 3, dadurch gekennzeichnet, daß die Hauptsteuerschaltung erneut den gleichen Freigabetest bis zu einer vorgegebenen maximalen Anzahl von Melodieperioden im vorher gemessenen Takt im Falle eines erfolglosen Freigabetests durchführt, wobei die Freigabephase negativ ist, wenn die maximale Anzahl der Perioden geprüft wurde, und die Freigabephase positiv ist und das Ablagemeßsignal auf den Steuerschaltkreis der Verzögerungsleitungen (60) übertragen wird, sobald ein Freigabetest bestanden wird.

5. Verfahren zur Funkpeilung nach einem der Ansprüche 2 bis 4, dadurch gekennzeichnet, daß die Erkennung einer Melodieperiode erreicht wird, wenn die Energien in drei Gruppen von zwei aufeinanderfolgenden Halbperioden des entnommenen Signals $(a_{1p}, a_{1n})$, $(a_{2p}, a_{2n})$, $(a_{3p}, a_{3n})$ und die entsprechenden Zeitintervalle zwischen den Halbperioden mit gleicher Bezeichnung $t_{12p}$, $t_{12n}$, $t_{23p}$, $t_{2n}$ der Gruppe folgender Kriterien entsprechen :

$$- a_{1p} > S_p ; \quad a_{1n} > S_n ;$$

$$- a_{2p} > MAX \left( \frac{3}{4} a_{1p} ; S_p \right) ; \quad a_{2n} > MAX \left( \frac{3}{4} a_{1n} ; S_n \right) ; \quad |t_{12p} - t_{12n}| < t_{pn} ; \quad t_{12p} < T_M \text{ et } t_{12n} < T_M ;$$

$$- a_{3p} > MAX \left( \frac{13}{16} (a_{2p} + (a_{2p} - a_{1p})) ; \ S_p \right)$$

$$a_{3n} > MAX \left( \frac{13}{16} (a_{2n} + a_{1n}) ; \ S_n \right)$$

$$|t_{23p} - t_{23n}| < t_{pn} ; \quad |t_{23p} - t_{12p}| < \Delta t ; \quad |t_{23n} - t_{12n}| < \Delta t \quad \text{et} \quad t_{23p} < T_M \text{ et } T_{23n} < T_M ,$$

wobei $S_p$, $S_n$, $t_{pn}$, $\Delta t$ und $T_M$ vorgegebene Grenzwerte sind, und der Meßwert der Melodieperiode dann $1/2(t_{23p} + t_{23n})$ ist.

6. Verfahren zur Funkpeilung nach Anspruch 1, dadurch gekennzeichnet, daß für ein empfangenes Signal, das durch ein Signal mit zwei Pegeln moduliert wurde, die Hauptsteuerschaltung (50) das Vorhandensein des empfangenen Signals bestimmt, indem es den Pegel des entnommenen Signals mit einem vorgegebenen Pegel, $V_0$, vergleicht, wobei das in der Analysephase erzeugte Schaltsignal eine festgelegte Frequenz besitzt und bei Signalunterbrechungen unterbrochen wird.

7. Verfahren zur Funkpeilung nach Anspruch 6, dadurch gekennzeichnet, daß während einer Meßphase die Hauptsteuerschaltung die Messung der Energie des entnommenen Signals abwechselnd für jeden Ausgang in drei aufeinanderfolgenden halben Schaltperioden steuert, $E_1$, $E_2$ und $E_3$ sind diese gemessenen Energien, wobei $E_1$ und $E_3$ gemessen werden, wenn der Schalter (30) einen der Ausgänge des Kopplers mit dem Eingang des Empfangskanals verbindet, und $E_2$ gemessen wird, wenn der andere Ausgang des Kopplers mit diesem Kanal verbunden wird, wobei die Freigabephase erfolgreich bzw. erfolglos sein kann, je nachdem ob der folgende Freigabetest bestanden bzw. nicht bestanden wird :

$(E_3 - E_1)$ kleiner als ein Grenzwert e ;

$E_3$ und $E_1$ größer als ein Grenzwert S ;

und dadurch gekennzeichnet, daß das Ablagemeßsignal proportional zu $(E_1 + E_3)/2 - E_2$ ist.

8. Verfahren zur Funkpeilung nach einem der vorausgegangenen Ansprüche, dadurch gekennzeichnet, daß das im Empfangskanal entnommene Signal zwischen dem demodulierten Signal und dem Zwischenfrequenzsignal ausgewählt wird, wobei die Mittel zur Verarbeitung einen Detektor (53) für das Zwischenfrequenzsignal umfassen, Mittel zur Verstärkung (51, 54), Mittel zur Zentrierung (56) der durchschnittlichen Komponente für das Zwischenfrequenzsignal und ein Tiefpaßfilter (57).

9. Einkanal-Funkpeilgerät mit Auswertung der Ankunftszeitdifferenz, das eine Meßbasis umfaßt, die aus zwei Antennen (A, B) gebildet wird, die mit den Eingängen eines Quadratur-Hybridkopplers (20) über steuerbare Verzögerungsleitungen (10, 11) verbunden sind, wobei die Ausgänge des Kopplers abwechselnd mit dem Eingang eines Empfängers (40) über einen Schalter (30) verbunden sind, und eine Hauptsteuerschaltung (50), die ein Schaltsignal $H_C$ für den Schalter erzeugt und ein im Empfänger entnommenes Signal verarbeitet, um ein Ablagemeßsignal $(S_E)$ — abhängig von der Differenz der gemessenen Energien — zwischen aufeinanderfolgenden Schaltvorgängen auf dem entnommenen Signal zu erzeugen, einen Steuerschaltkreis für die Verzögerungsleitungen (60), der von dem Ablagemeßsignal gesteuert wird, dadurch gekennzeichnet, daß die Hauptsteuerschaltung einen Eingang für ein demoduliertes Signal (BF) und einen Eingang für Zwischenfrequenzsignale (FI) besitzt, die mit dem Empfänger bzw. mit den Eingängen eines Schalters (52) über einen Verstärker (51) für das erstere (BF), über einen Detektor (53), einen Verstärker (54) und Mittel zur Zentrierung der Gleichspannungskomponente (56) für das zweite (FI) verbunden ist, wobei der Ausgang des Schalters (52) mit einem Tiefpaßfilter (57) verbunden ist, auf das Mittel zur Verarbeitung folgen, die das mit dem erfaßten Signal synchronisierte Schaltsignal $H_C$ bei Vorhandensein eines demodulierten Signals (BF) abgeben.

# FIG_1

# FIG_3

# FIG_2

FIG_4

FIG_5

3

FIG_6

EP 0 148 672 B1